# EUROPEAN PATENT SPECIFICATION

(11) **EP 1 393 278 B1**
(45) Date of publication and mention of the grant of the patent: **21.03.2007**
(21) Application number: 02713571.4
(22) Date of filing: 12.02.2002
(51) Int. Cl.: G08B 23/00, B60R 21/01, G01L 1/12

(54) **Steering wheel with horn switch**
Lenkrad mit Hupenschalter
Volant pour automobile avec commutateur de klaxon.

(30) Priority: 27.02.2001 US 271617 P
(43) Date of publication of application: 03.03.2004
(73) Proprietor: KEY SAFETY SYSTEMS, INC., Sterling Heights, MI 48314 (US)
(72) Inventor: GIOUTSOS, Tony, Novi - MI 48347 (US); JANISZEWSKI, Robert, Ann Arbor - MI 48103 (US); LABADIE, Steve, Southgate - MI 48195 (US)
(74) Representative: Gislon, Gabriele
(86) International application number: PCT/US2002/004043
(87) International publication number: WO 2002/069295

(56) References cited:
- EP-A- 0 676 627
- US-A- 4 979 395
- US-A- 5 420 563
- US-A- 5 453 929
- US-A- 5 739 757
- US-A- 5 767 766
- US-A- 5 905 210
- US-A- 5 969 616
- US-B1- 6 218 947

## Description

The present invention relates to an improved system for activation of a vehicle horn or other vehicle functions.

Current horn sensor designs have a large variability in force over the operating area of the sensor. At a given location on the horn sensor contact surface, the force required may also vary over operating conditions, such as temperature. The sensitivity level of the sensor cannot be adjusted easily without significant time and expense for retooling.

Current vehicles include an airbag for the driver as well as the front seat passenger. Manufacturers have sought to develop systems to disable the passenger side airbag if the weight on the passenger seat is below a given threshold.

US 5 739 757 teaches the use of a magnetostrictive sensor to measure strain on a wires under the cushion of the seat to determine the weight of a person or thing seated. However, this design may not always measure all of the weight on the seat, which may not be transmitted to the wires under the cushion, depending upon the position of the passenger.

The present invention provides an improved system and method for generating a signal representative of a force, such as the weight of a person or thing on a seat within a motor vehicle, or the force applied to a switch on a vehicle steering wheel.

The present invention provides a force measurement system utilizing active magnetostrictive sensors. The active magnetostrictive sensor includes an excitation coil and a detection coil. The excitation coil converts an electrical AC input signal into an acoustic wave by the magnetostrictive principle. The signal is AC to allow for a changing current through the coil, which when wrapped around a ferrite material creates an electromagnet. The acoustic wave travels through the ferromagnetic sensing material. The acoustic signal passing through the ferrite core creates an electrical current in the detection coil. When stress is applied to the sensing material, the acoustic wave is affected and the detection coil monitors this change. The change can be measured by measuring voltage or current. These methods require a constant excitation voltage/current. This change in the current/voltage, as measured from the detection coil, has a linear relationship to the amount of force applied on the sensing material. The sensor operates in a linear fashion as long as some force or "preload" is used to get the operating point away from the non-linear region- Preferably a pre-load is used in the present invention.

The present invention provides a system for activating a horn or other vehicle functions as defined in claim 1. The ferromagnetic element is coupled to a contact surface, which is activated by a user desiring to activate the horn. The force exerted by the user on the contact surface is measured by analyzing the signal (voltage and/or current) received by the detection coil. If a predetermined change is detected by the associated electronics, the system activates the horn. This system provides a more constant force requirement across the area of the contact surface and under different operating conditions, such as temperature. Because the threshold can be adjusted in the electronics or software, the force required to activate the horn can be easily changed, such as for different vehicles or for user preference.

### Brief Description of the Drawings

Fig. 1 shows the force sensor system of the present invention implemented as a steering wheel switch and weight sensor (not covered by the claims).
Fig. 2 shows an active force sensor according to the present invention.
Fig. 3 is a graph illustrating the operation of the force sensor of Fig. 2.
Fig. 4Aa shows one possible arrangement of the force sensor of the present invention as a horn activation switch.
Fig. 4B shows a second arrangement of a horn activation switch, similar to Fig. 4A.
Fig. 4C shows a third arrangement of the horn activation switch of Fig. 4A.
Fig. 4D shows a fourth arrangement for the horn activation switch of Fig. 4A.
Fig. 4E shows a fifth arrangement for the horn activation switch of Fig. 4A.
Fig. 4F shows a sixth possible arrangement for the horn activation switch for Fig. 4A.
Fig. 5A shows an alternate embodiment of the magnetostrictive sensor of Fig. 2.
Fig. 5B shows an alternate embodiment of the magnetostrictive sensor of Fig. 5A.
Fig. 6 shows a more detailed view of the weight sensor of Fig. 1 (not covered by the claims).
Fig. 7 shows an alternate embodiment of the force sensor of Fig. 6.

### Detailed Description of the Invention

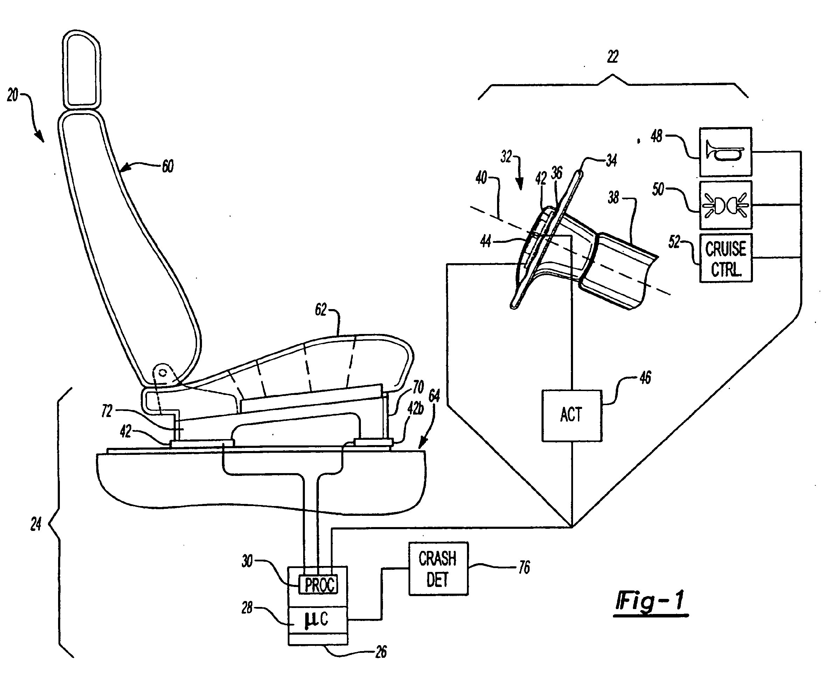

Fig. 1 shows a force sensor system 20 of the present invention implemented here as a user activated switching system 22 and an occupant weight sensing system 24 both utilizing a controller 26. The controller 26 includes a microprocessor 28, including associated memory, storage, RAM, etc. and any necessary signal processor 30, such as amplifiers, filters, analog to digital converters, etc. Signal processing could be provided by the microprocessor 28 in a known manner. The user activated switching system 22 activates vehicle functions when selected by a user, while the occupant weight sensing system 24 determines the presence, weight and/or position of an occupant in the vehicle.

The user activated switching system 22 is shown installed on a vehicle steering wheel 32, although the switching system 22 could also be utilized in other locations in the vehicle. The steering wheel 32 includes a rim 34 connected to a hub 36, which is mounted on steering column 38 and is rotatable about its axis 40. A force sensor 42 is mounted on the hub 36, which is preferably for activation of a vehicle horn, but could be used for other vehicle functions as will be described below. The force sensor 42 is preferably mounted behind an airbag module 44 as shown, but may be mounted in front of an airbag module. The airbag module 44 is activated by an airbag actuator 46 as determined by the controller 26. The controller also controls other vehicle functions, such as the horn 48, headlights 50 and cruise control 52, based on activation of the force sensor 42.

In the user activated switching system 22, the force sensor 42 senses force imparted by the user upon the force sensor 42, either directly or through the airbag module 44 positioned in front of force sensor. In response, the controller 26 activates the horn 48 or other vehicle functions, such as the headlight 50 or cruise control 52.

In a crash the controller 26 also selectively activates the airbag module 44 based upon inputs from force sensors 42 and 42c located below the vehicle seat 60, as well as other data inputs, which sense the weight of an occupant seated in the vehicle seat. Preferably, the force sensors located below the vehicle seat sense all of the weight between the seating surface 62 of the vehicle seat 60 and the vehicle floor 64. In this example, the force sensors 42 and 42c are installed between the vehicle seat brackets 72 and the vehicle floor 64. The vehicle seat 60 in this example includes four brackets, two are shown, and that sensors, two are shown, would be installed between all of the brackets and the vehicle floor 64. The force sensed by each of the sensors located below the seat can be summed to determine the total weight upon the seating surface 62. Alternatively, or additionally, the controller 26 can determine whether the occupant is seated toward the front of the seat, in the middle of the seat, toward the left or right of the seat 68, or whether there is no occupant in the seat.

Utilizing known algorithms and rules, the controller 26 determines the occurrence of a crash using a crash detection sensor 76, such as an accelerometer or ball and tube sensor. The controller 26 then determines whether to activate the airbag module 44 based upon the severity or type of crash and based upon information from the sensors located beneath the seat. If the controller 26 determines from the sensors located beneath the seat that there is no occupant in the seat 60, the controller 26 does not activate the airbag module 44. If the weight on the seating surface 62 is determined to be below a threshold level, such as when the seat occupant is a child, the controller 26 does not activate the airbag module 44. For a multistage airbag module 44, the controller 26 may determine which stages of airbag module to activate, for more or less force, based upon the information from the sensors.

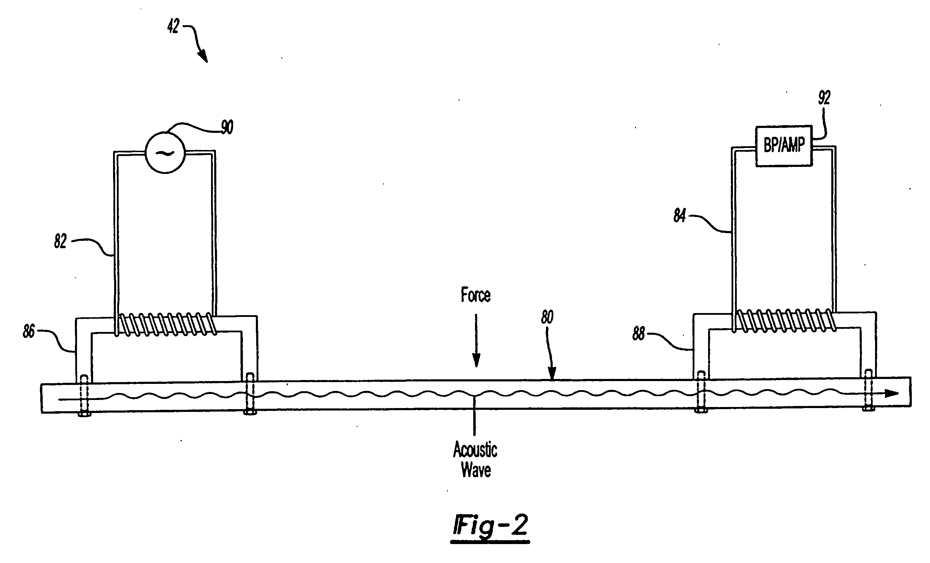

Fig. 2 shows a force sensor 42 that could be utilized for any of the force sensors of the system shown in Fig. 1. In Fig. 2, the force sensor 42 includes a ferromagnetic sensing material 80, which receives the force to be measured, such as the force from the user to activate the user activated switch or the force from the weight of the occupant. The force sensor 42 includes an excitation coil 82 and a detection coil 84 each preferably wrapped about a ferrite core 86, 88. The ferrite cores 86, 88 are preferably abutting, adjacent the ferromagnetic sensing material 80, or actually comprise the ferromagnetic sensing material, as described in other embodiments below. The function generator, preferably an AC sine wave generator 90 sends an excitation signal to the excitation coil 82. A bandpass filter/amplifier 92 is connected the detection coil 84. A function generator 90 and bandpass filter/amplifier 92 are preferably part of the signal processor 30 of Fig. 1.

The excitation coil 82 converts the electrical AC input signal into an acoustic wave by the magnetostrictive principal. The acoustic wave travels through the ferromagnetic sensing material 80 and the ferrite core 88 of the detection coil 84, which creates an electrical current in the detection coil 84. When force or stress is applied to the ferromagnetic sensing material 80, the acoustic wave is affected by the change in strain in the ferromagnetic sensing material, as is the electrical current in the detection coil 84. The current, or voltage, is measured to determine the change. The frequency and amplitude of the signals and the number of turns in the coils 82, 84 will depend upon the particular application, as well the materials of the cores 86, 88 and the thickness, texture and shape of the ferromagnetic sensing material 80. One of ordinary skilled in the art would be able to determine suitable parameters for a given design. Any of the pairs of excitation coil 82 and detection coil 84 could be replaced with a single coil that alternates as an excitation coil and detection coil.

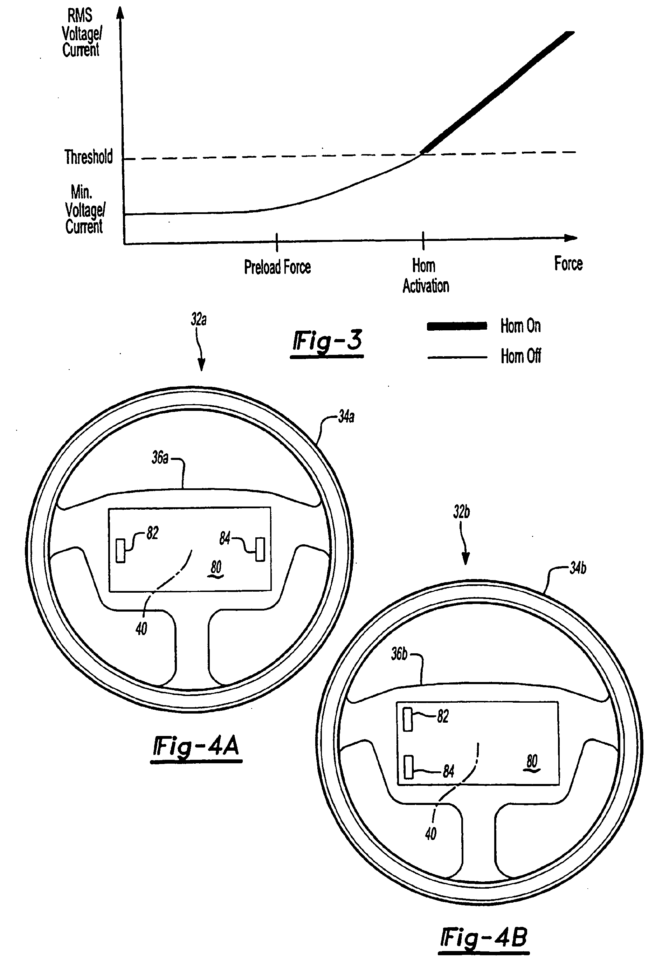

Fig. 3 shows the RMS voltage output from the force sensor 42 in Fig. 2 for a given force. Preferably, the ferromagnetic sensing material 80 in Fig. 2 is mechanically preloaded so that the output versus force input is in the linear region. The threshold shown in Fig. 3 could be for activation of the horn or other vehicle functions for the user activated switching system 22 of Fig. 1. The threshold can be easily changed by simply changing the software in the controller 26. Thus, the sensor 42 can used for various applications and in different vehicle and can be easily configured to activate at the proper threshold.

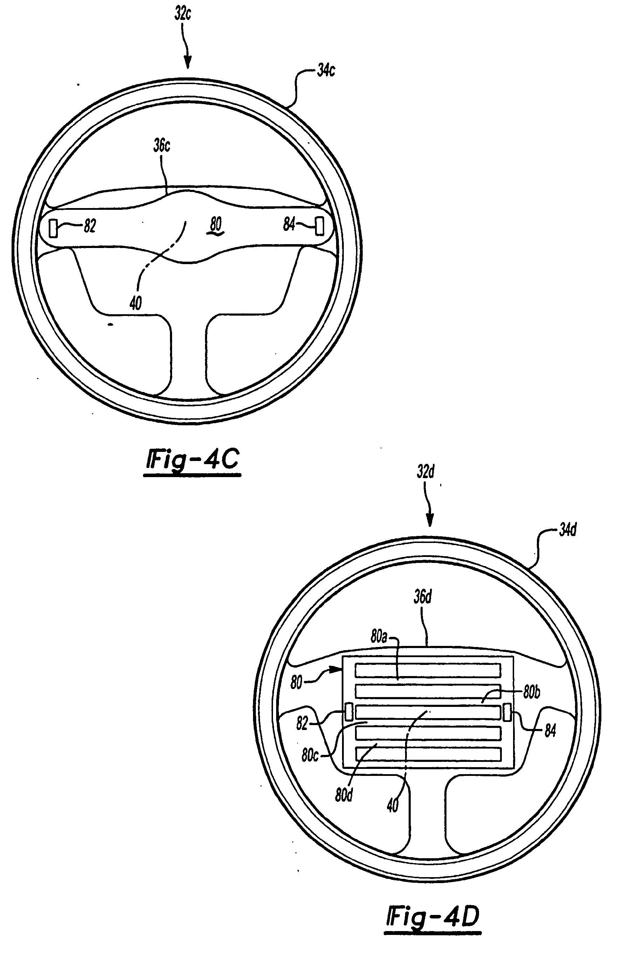

Figs. 4A-F show alternative configurations of the force sensor 42 on steering wheels 32a-f that each comprise a rim 34a-f and a hub 36a-f. In Fig. 4A the excitation coil 82 and detection coil 84 are positioned at opposite ends of the ferromagnetic sensing material 80, that is to say on opposite sides of the axis of rotation 40 of the steering wheel 32a. Alternatively, as shown in Fig. 4B, the excitation coil 82 and detection coil 84 are positioned at the same end of the ferromagnetic sensing material 80, on the same side of the axis of rotation 40 of the steering wheel 32b, to simplify the connection to the controller 26, as shown in Fig. 1. The excitation and detection coils 82, 84 could also be installed on different shaped steering wheel hubs as shown in Fig. 4C.

Fig. 4D shows an embodiment having multiple strips 80a-d formed of the ferromagnetic sensing material with cutout sections between the strips 80a-d. In this embodiment, the force on each of the strips can be distinguished from force on any of the other strips. Force on any one of the strips 80a-d will cause different changes in the signal received at the detection coil 84 which can be discerned by the controller 26, as shown in Fig. 1. Varying the distances, widths, thicknesses, stiffnesses, textures, or other characteristics among the strips 80a-d will make it easier to discern activation of the different strips 80a-d. In this manner, each of the strips 80a-d can be programmed to operate a different vehicle function, for example the vehicle horn 48 could be activated by force on the strip 80a, head lights 50 by force on the strip 80b and cruise control 52 by forces on the strips 80c-d, as shown in Fig. 1. It should be noted that the embodiment of Fig. 4D would preferably be installed in front of an airbag module.

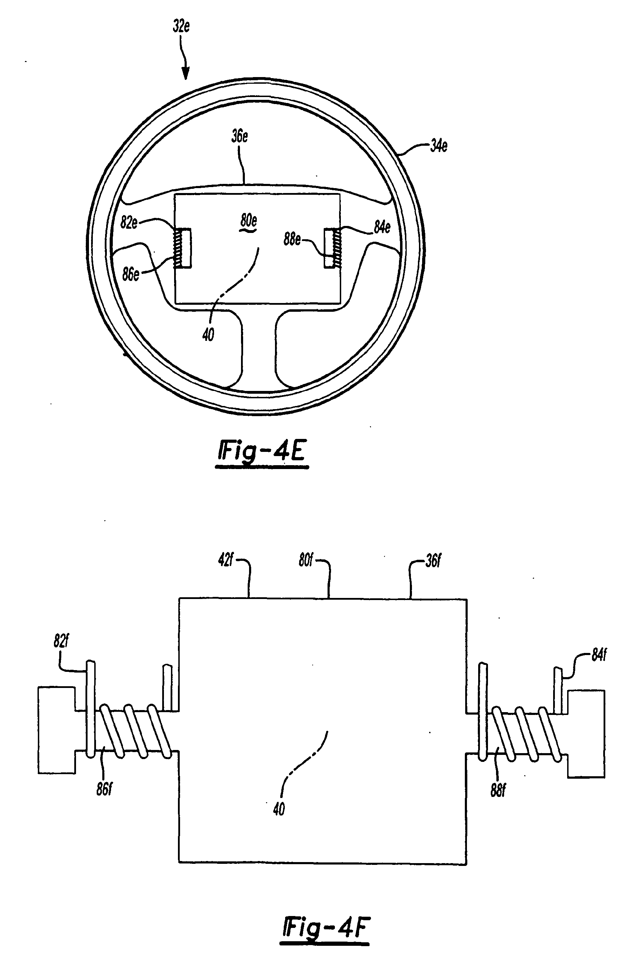

Fig. 4E shows an alternate embodiment of a steering wheel 32e wherein the excitation coil 82e and the detection coil 84e are coiled about portions of the ferromagnetic sensing material 80e which constitute the ferrite cores 86e and 88e. In this embodiment, a separate ferrite core is eliminated and a portion of the ferromagnetic sensing material 80e is used as the ferrite core. This arrangement could be implemented in any of the arrangements shown in Figs. 4A-D to reduce the complexity and cost of the design.

Fig. 4F shows an alternate design for a sensor 42f including ferromagnetic sensing material 80f mounted on hub 36f of the steering wheel, which is not shown. Again, a portion of the ferromagnetic sensing material is used to the form ferrite cores 86f, 88f about which the excitation coil 82f and detection coil 84f, respectively, are coiled. The sensor 40f could be used in the designs of Figs. 4A-E.

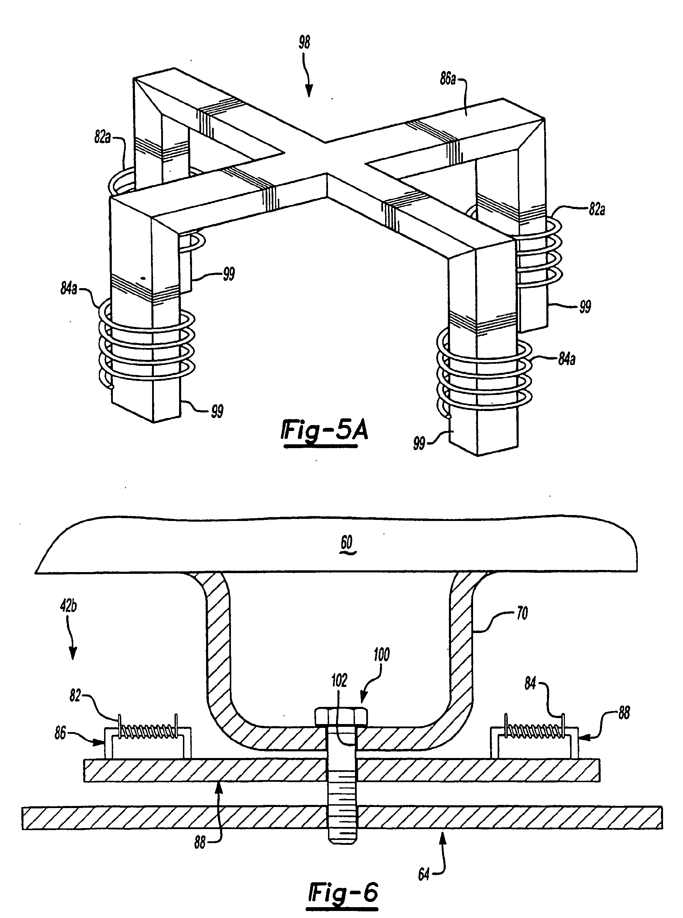

Fig. 5A shows an alternate magnetostrictive sensor 98 including an alternate ferrite core 86a, which could be utilized for the excitation coils 82a and detection coils 84a. The alternative ferrite core 86a comprises a cross having four posts 99 extending perpendicularly from ends of the cross. The excitation and detection coils 82a,b are coiled about the perpendicular posts 99. This sensor could be used in the sensor designs of Figs. 4A-D.

Fig. 5B shows a magnetostrictive sensor 120 that is an alternative to the sensor 98 of Fig. 5A. The ferrite core 126 comprises two u-shaped members 126, each having a crossbar 128 and two perpendicular posts 130. The excitation and detection coils 82 a, b are coiled around the crossbars 128. The crossbar 128 of one u-shaped member 126 is positioned adjacent the crossbar 128 of the other u-shaped member. This sensor 120 is easier to manufacture and could also be used in the sensor designs of Figs. 4A-D.

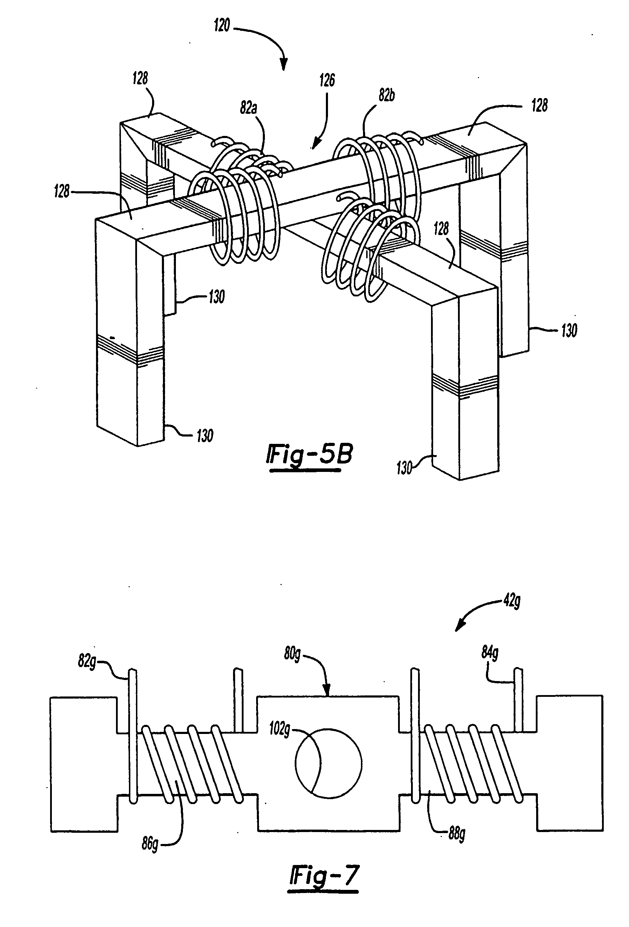

Fig. 6 is an enlarged view of the weight sensor 42b located below the vehicle seat in Fig. 1. Any other weight sensors located below the seat would be identical. In Fig. 6 the ferromagnetic sensing material 88 is mounted between the bracket 70 of the vehicle seat 60 and the vehicle floor 64, such that all of the weight on the seat 60 passing through the bracket to the floor 64 passes through the ferromagnetic sensing material 88. A fastener, such as a bolt 100, connects the bracket 70 to the vehicle floor 64, passing through an aperture 102 in the ferromagnetic sensing material 88. The excitation coil 82 and the associated ferrite core 86 may be positioned on one side of the bolt 100, while the detection coil 84 and the associated ferrite core 88 are on the opposite side of the bolt. Alternatively, different arrangements could be utilized. For example, Fig. 7 shows an alternate sensor 42g that could be utilized in place of the sensor 42b of Fig. 6. In Fig. 7 the ferromagnetic sensing material 80F, including the aperture 102g, has portions 86g, 88g, which form the ferrite cores for the excitation coil 82g and the detection coil 84g. Integrating the ferrite core in the ferromagnetic sensing material 80f reduces the number of parts and simplifies the design. This sensor design could also be used in the horn switch applications by designing the steering wheel to accommodate into the sensor.

All of the embodiments of the user activate switching system 22 of the present invention offer three main benefits over current switch designs. The switches of the present invention will have relatively constant force thresholds over changes in operating conditions, such as temperature. Different locations on the steering wheel will also have a relatively constant force threshold, unlike current horn activation switches. The sensitivity level can be easily adjusted by a change in software and controller, or a change in the circuitry in signal processor 30

The vehicle occupant weight sensing system 24 which is not part of the present invention measures all of the weight upon the seating surface 62, because sensors 42b,c are installed between the seat 60 and the vehicle floor 64. The change in height of the seat is minimal, since it only the height of the ferromagnetic sensing material 80, which can be minimal. The electronics for this system, and the controller 26, is shared among the sensors 40b,c.

## Claims

1. A vehicle switching system comprising a steering wheel (32) and a magnetostrictive sensor (42) mechanically coupled to the steering wheel to receive a force transmitted to the steering wheel (32) by an occupant of the vehicle, the magnetostrictive sensor (42) comprising a ferromagnetic element (80) and generating a signal based upon stress in the ferromagnetic element caused by the force transmitted to the vehicle component by an occupant of the vehicle contact, and a switch that activates at least one device in the vehicle selected from a horn (48), headlights (50) and cruise control (52) based upon the signal from the magnetostrictive sensor (42).

2. The vehicle switching system of claims 1 wherein the magnetostrictive sensor (42) includes an excitation coil (82) generating an acoustic wave in the ferromagnetic element (80).

3. The vehicle switching system of claim 1 wherein the magnetostrictive sensor (42) includes a detection coil (92) generating an electrical current based upon the acoustic wave in the ferromagnetic element (80).

4. The vehicle switching system of claims 2 wherein the magnetostrictive sensor (42) includes an excitation coil (82) generating an acoustic wave in the ferromagnetic element (80) and a detection coil (84) generating an electrical current based upon the acoustic wave in the ferromagnetic element.

5. The vehicle switching system of claim 4 wherein said excitation coil (82) and said detection coil (84) are mounted on opposite ends of said ferromagnetic element (80).

6. The vehicle switching system of claim 4 wherein said excitation coil (82) and said detection coil (84) are mounted on the same end of said ferromagnetic element (80).

7. The vehicle switching system of any of claims 4 - 6 wherein both the detection coil (82) and the excitation coil (84) are coiled around at least a portion of said ferromagnetic element (80).

8. The vehicle switching system of any of claims 4 - 6 wherein said detection coil and said excitation coil are both coiled around a single ferrite core (86).

## Patentansprüche

1. Fahrzeugschaltsystem, das ein Lenkrad (32) und einen magnetostriktiven Sensor (42) aufweist, der mechanisch mit dem Lenkrad gekuppelt ist, um eine Kraft aufzunehmen, die auf das Lenkrad (32) von einem Insassen des Fahrzeuges übertragen wird, wobei der magnetostriktive Sensor (42) ein ferromagnetisches Element (80) aufweist und ein Signal auf der Basis der Spannung im ferromagnetischen Element erzeugt, hervorgerufen durch die Kraft, die auf das Fahrzeugteil durch einen Kontakt eines Insassen des Fahrzeuges übertragen wird, und einen Schalter, der mindestens eine Vorrichtung im Fahrzeug aktiviert, ausgewählt unter einer Hupe (48), den Scheinwerfern (50) und dem Tempomat (52), basierend auf dem Signal vom magnetostriktiven Sensor (42).

2. Fahrzeugschaltsystem nach Anspruch 1, bei dem der magnetostriktive Sensor (42) eine Erregerspule (82) umfasst, die eine Schallwelle im ferromagnetischen Element (80) erzeugt.

3. Fahrzeugschaltsystem nach Anspruch 1, bei dem der magnetostriktive Sensor (42) eine Erfassungsspule (92) umfasst, die einen elektrischen Strom basierend auf der Schallwelle im ferromagnetischen Element (80) erzeugt.

4. Fahrzeugschaltsystem nach Anspruch 2, bei dem der magnetostriktive Sensor (42) eine Erregerspule (82), die eine Schallwelle im ferromagnetischen Element (80) erzeugt, und eine Erfassungsspule (84) umfasst, die einen elektrischen Strom basierend auf der Schallwelle im ferromagnetischen Element erzeugt.

5. Fahrzeugschaltsystem nach Anspruch 4, bei dem die Erregerspule (82) und die Erfassungsspule (84) an entgegengesetzten Enden des ferromagnetischen Elementes (80) montiert sind.

6. Fahrzeugschaltsystem nach Anspruch 4, bei dem die Erregerspule (82) und die Erfassungsspule (84) am gleichen Ende des ferromagnetischen Elementes (80) montiert sind.

7. Fahrzeugschaltsystem nach einem der Ansprüche 4 bis 6, bei dem sowohl die Erfassungsspule (82) als auch die Erregerspule (84) um mindestens einen Abschnitt des ferromagnetischen Elementes (80) gewickelt sind.

8. Fahrzeugschaltsystem nach einem der Ansprüche 4 bis 6, bei dem die Erfassungsspule und die Erregerspule beide um einen einzelnen Ferritkern (86) gewickelt sind.

## Revendications

1. Système de commutation d'un véhicule, comprenant un volant (32) et un capteur magnétostrictif (42), accouplé mécaniquement sur le volant pour recevoir une force transmise vers le volant (32) par un occupant du véhicule, le capteur magnétostrictif (42) comprenant un élément ferromagnétique (80) et émettant un signal basé sur la contrainte dans l'élément ferromagnétique provoquée par la force transmise vers le composant du véhicule par le contact d'un occupant du véhicule, et un commutateur actionnant au moins un dispositif dans le véhicule, sélectionné parmi un avertisseur sonore (48), des phares (50) et un régulateur de vitesse (52), sur la base du signal transmis par le capteur magnétostrictif (42).

2. Système de commutation de véhicule selon la revendication 1, dans lequel le capteur magnétostrictif (42) englobe une bobine d'excitation (82) produisant une onde acoustique dans l'élément ferromagnétique (80).

3. Système de commutation de véhicule selon la revendication 1, dans lequel le capteur magnétostrictif (42) englobe une bobine de détection (92), produisant un courant électrique sur la base de l'onde acoustique dans l'élément ferromagnétique (80).

4. Système de commutation de véhicule selon la revendication 2, dans lequel le capteur magnétostrictif (42) englobe une bobine d'excitation (82) produisant une onde acoustique dans l'élément ferromagnétique (80) et une bobine de détection (84), produisant un courant électrique sur la base de l'onde acoustique dans l'élément ferromagnétique.

5. Système de commutation de véhicule selon la revendication 4, dans lequel ladite bobine d'excitation (82) et ladite bobine de détection (84) sont montées sur les extrémités opposées dudit élément ferromagnétique (80).

6. Système de commutation de véhicule selon la revendication 4, dans lequel ladite bobine d'excitation (82) et ladite bobine de détection (84) sont montées sur la même extrémité dudit élément ferromagnétique (80).

7. Système de commutation de véhicule selon l'une quelconque des revendications 4 à 6, dans lequel la bobine de détection (82) et la bobine d'excitation (84) sont enroulées autour d'au moins une partie dudit élément ferromagnétique (80).

8. Système de commutation de véhicule selon l'une quelconque des revendications 4 à 6, dans lequel ladite bobine de détection et ladite bobine de d'excitation sont enroulées autour d'un seul noyau de ferrite (86).
